# EUROPEAN PATENT APPLICATION

(11) **EP 1 413 215 A1**
(43) Date of publication of application: **28.04.2004**
(21) Application number: 03023203.7
(22) Date of filing: 13.10.2003
(51) Int. Cl.: A43B 3/12, B29D 31/508, B29D 31/50

(54) **Method for manufacturing open heeled shoes**

(30) Priority: 23.10.2002 CL 24292002
(71) Applicant: Hirmas Rubio, Sergio Ode, San Joaquin, Santiago (CL)
(72) Inventor: Hirmas Rubio, Sergio Ode, San Joaquin, Santiago (CL)
(74) Representative: Esteban Perez-Serrano, Maria Isabel

(57) **Abstract**

The present invention is referred to a method for manufacturing open heeled shoes, with or without other openings around, by molding the sole directly attached to the insole, with the borders of the insole finishing embedded downwards into the sole, below the outline of the base of the last and where a soft insole is cut of about one and a half millimeters thickness, with a perforation preferably circular in the middle of the heel to center it, with the shape of the base of the last, but increased all around in three to ten millimeters approximately on whose borders are aligned the ends of the upper pieces and strongly attached to the insole by stitching or staples or other means close to the borders and, besides, at the level that will correspond to the edge of the base of the last. How much is necessary to increase the insole beyond the base of the last , will depend of the depth of the edge of the ring in the zone where the borders of the insole will be contained once bended, pushed by the edge of the ring, in order to coincide or to remain slightly shorter than the edge.

## Description

### FIELD OF THE INVENTION

The present invention relates to a method for manufacturing open-heeled shoes with or without other openings around, with the sole molded directly attached to the insole, in which the borders of the insole finish embedded downwards into the sole below the outline of base of the last, looking as a wrapped insole. This is particularly useful for sandals and other styles that show this finishing.

### BACKGROUND OF THE INVENTION

The method for manufacturing shoes by injecting or pouring plastic material into a mold to conform the sole directly attached to uppers is widely used since a long time. To do this, injection or pouring machines are required and they consist of two main parts, the injector or the pouring set and the table or structure whit mold carriers where molds are placed. The molds have a cavity with the size and shape of the sole, that is limited by the top with the last dressed with the upper; by the sides with the rings that surrounds the last and by the bottom with the base. When cavity is filled by injection, the mold has in the base or rings one or more injection points that are ducts that connects the outside with the cavity, on wich the injectors of the machine get in touch to. It is used to conform soles made of plastic materials as polyurethane, polivynilchloride, thermoplastic rubber or the like and was originally designed for manufacturing shoes covered all around in a continuous fashion, with out openings. In this method, the upper with a string attached one and a half turn on its lower border by means of a wrapping stiching that leaves the string free inside of it, is placed on the last. Both ends of the string are pulled and the string moves shortening its course, adjusting the upper to the last. String ends are tied with the opposite one and what exceeds is cutted away. This is called "string lasting". The uppers can also be stitched on their outline to the border of the insole and placed on a last with articulated heel in its contracted position, that is extended afterwards to its normal position, becoming the upper propely drawn. Mold is closed and the material of he sole is injected into it. To fill the mold by pouring it is done with their bottom and sides closed, but with the last lifted. Once material is poured, the last descends, closing the mold. After few minutes the plastic material becomes solid, remaining the sole strongly attached to the upper. Mold is opened and the shoe is retired for finishing process.

Later, variations of this method of manufacturing allowed to be used for uppers having a non continuous outline. An alternative is using string lasting, in wich case a piece, usually of teflon is inserted in the last at the level where rings close against the last, to fill the empty space that the lack of upper material will leave. Once shoe is retired from the mold, an insole is placed and attached with some adhesive on the superior face of the sole. Because of cost, most of the time it is a cutted insole, with a rough finishing appearance. Other method is linking the upper to an insole that will exceed the base of the last. In this case, once upper is lasted, rings will close around the last and descend together up to fit on the base of the mold, remaining the borders of the insole that protrudes, tighten between rings and base of the molde. Thus, once sole is molded, the borders of the insole will protrude to the sides and must be cutted away to achive a proper look that, nevertheless, will be rather rough. Other similar methods have been developed in which the insole goes upwards in those places where upper lacks, between rings and last, to seal the molding cavity; all of them have in commun that the insole protrudes beyond the sole and must be cutted away.

The present invention allows to manufacture shoes, by molding the soles directly united to the insole, whose borders finish embeled downwards in the sole, below the outline of the base of the last of the mold, with a very clean finishing and fine appearance.
It has great advantages as it cuts down costs by saving raw materials and hand labor if compared with sandals made in the traditional way, that is by joining upper to an insole with adhesive and then both to the sole, using cement and press operation, to finally place a wrapped insole on it, that also must be cemented. In the present invention, lasting upper and insole on the last is an operation rather light and finishing process is done with few people, as shoe results very clean, without relevant material leakage. Other advantage is that in the sole molding operation, different styles of uppers can be done, without making any adjustment of the mold, nor mold modification.

### SUMMARY OF THE INVENTION

The object of the present invention is to supply a method for manufacturing openheeled shoes, that also can have other openings around, by molding the sole directly attached to the insole, by injecting or pouring the liquid or melted plastic material into the mold, in wich the borders of the insole finishing embedded downwards into the sole, below the outline of the base of the last. Other of the objectives is to reduce costs of production by saving materials and hand labor, with reproducible results. According the mentioned objectives, the present invention includes innovation of the functional design of the ensamble upper - insole and the mold.

The upper is done with separated or united pieces or straps, whose ends are aligned on the borders of the insole and strongly attached to it by stitching or other means. The insole has the shape of the base of the last, but increased all around about three to ten millimeters; must have a nice looking upper face and its backing must have very good adhesive propriety with the material of the sole. Besides, needs to be flexible and very resistant to tear. In the middle of the base of the heel, the insole has a perforation that will fit in the protruding element inserted in same position on the base of the last, to center and draw the insole and upper ensamble, once lasted while mold is being closed and during injection process.

The mold has essential innovations in its functional design of the last and ring and incorporate a supporting structure of both, that links them to the last carrier of the molding machine.

The original last, that has approximately the shape and size of the foot, is modified into a metallic version keeping the base untouched, but removing upwards all that exceeds outside its vertical projection, leaving all around the lower part, a vertical wall of about five millimeters height, becoming narrower upwards. Nevertheless, its volume from toe to the rear of shanks must be compensated in height. This modification of the last is to allow the displacement of the ring that surrounds it, from up to down, through it, up to meet the superior face of the base of the mold, without changing its fit.

In the center of the base of the heel of the last, it has inserted an element that protrude downwards to center and hold in proper position insole and upper ensamble.

The ring is a metallic piece vertically crossed by a central hole that, in horizontal position, surrounds the last. Its inferior face fits on the superior face of the base of the mold. The hole, in its narrowest part that begins approximately from the inferior third downwards, it has vertical walls, having the shape of the base of the last, but increased all around about three millimeters. On the inferior face of the ring is excavated the superior border of the molding cavity of the sole, remaining inside all around, a vertical edge of about one millimeter thickness that protrudes downwards three to ten millimeters from the top of the cavity. The outer side of the cavity of the ring coincides with the outer side of the cavity excavated on the top of the base of the mold for molding the lower part of the sole Ring also have elements that, together with the supporting structure that holds it, allows it to move vertically through the last up to fit with the superior face of the base of the mold and consists in two circular vertical perforations through the ring of such size and position that allows two parallel guide bars of the supporting structure to pass through them.
The supporting structure at the bottom holds the last stable; at the top is coupled to the last carrier of the machine and, about the middle, holds the ring allowing it to move through a precise vertical course in relation to the last.

The following is the way how the upper-insole ensamble and the mold work in the present invention. With the mold placed on the mold carrier of the injection machine, with the last of the mold in inverted position and the ring retired backwards by gravity, upper-insole are introduced around the toe of the last up to what its size allows, inserting in the protruding element at the center of the base of the heel, the perforation of the rear part of the insole. Supporting structure with the dressed last and ring rotates 180°, to normal position and goes down. Ring by gravity descends through the guide bars surpassing slightly the last, up to fit on the base of the mold, pushing downwards the borders of the insole with the ends of the upper attached to it, remaining them bended downwards and holded inside the edge of the ring. Thus, with the mold closed, the pressure elements of the station of the machine go down pressing the ring against the base of the mold. The injector approaches to the mold up to get in touch with injection point of the mold and introduces to it the melted plastic material of the sole that pushes the insole against the bottom of the last and its borders against the edge of the ring. Thus, the insole covers the space between last and ring in those places where there are no uppers ends, sealing the superior part of the cavity of the mold, containing the melted plastic material and avoiding any important leaking. For filling the mold by pouring, it is done with the last and ring raised and they descend immediately after pouring is finished. After a couple of minutes plastic becomes solid and firmely attached to the insole. The pressure elements go up and also the last carrier with the supporting structure, last and ring, that rotates in 180° remaining in inverted position. Ring moves backwards because of gravity, leaving the last free to take the shoe off, that will have the insole borders embedded downwards into the sole, looking like a wrapped one. The hole left because of the centering element on the base of the heel is covered with a label.

### BRIEF DESCRIPTION OF THE DRAWINGS

The following drawings in wich like reference characters indicate like parts are illustrative embodiments of the present invention and are not to limit its scope.
Figure 1A is the superior view of the base of the mold to be filled by injection, as it shows ends of injection ducts in the bottom of the cavity placed in it.
Figure 1B is a side sectional view of the base of the mold to be filled by injection.
Figure 1C is a side sectional view of the base of the mold to be filled by pouring.
Figure 1D is an angled perspective view of the base of the mold.
Figure 2A is the inferior view of the ring.
Figure 2B is a side sectional view of the ring through AB.
Figure 2C is a side sectional view of the ring through CD.
Figure 2D is an angled perspective view of the ring.
Figure 3A is the side view of the last of the mold, showing both the last of the mold and in discontinued lines the shape of the original last.
Figure 3B is the inferior view of the last of the mold.
Figure 3C is a cross sectional EF view of the last of the mold, showing both, the last of the mold and in discontinued lines the shape of the original last.
Figure 4A is the front view of the supporting structure of the mold.
Figure 4B is the side view of the supporting structure.
Figure 4C is the superior view of the supporting structure.
Figure 4D is an angled perspective view of the supporting structure.

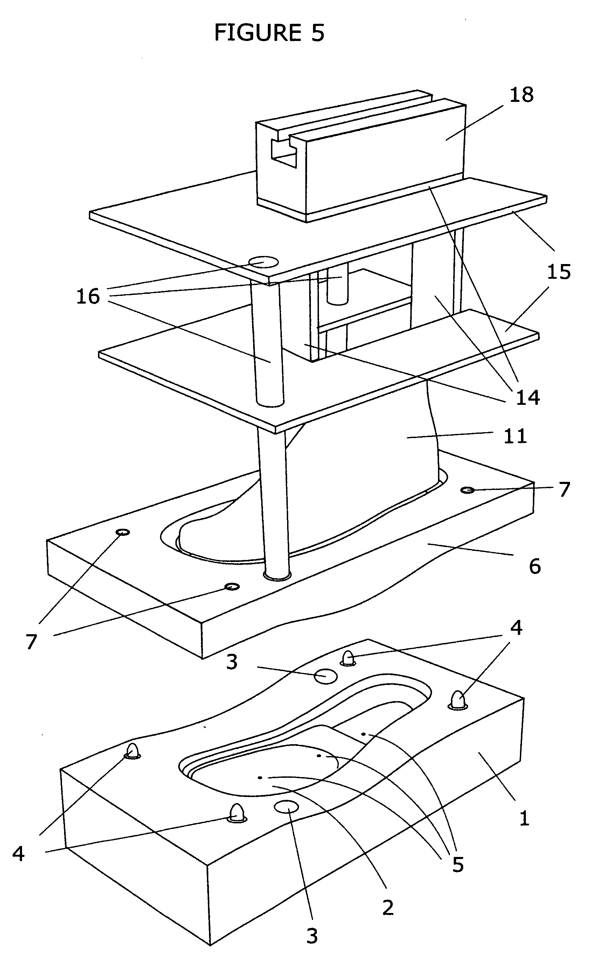

Figure 5 represents the ensamble of the mold opened in an angled perspective view.
Figure 6A is the insole shape.
Figure 6B represents the upper pieces of an upper, as example
Figure 6C is a view of the ensamble insole and upper stitched together.
Figure 7 is the side view of the ensamble of the mold with the pair of supporting structure, rings and dressed lasts, placed on the rotative last carrier of the machine, one in inverted position and the other in position during injection and the base of the mold placed on the table of the machine.

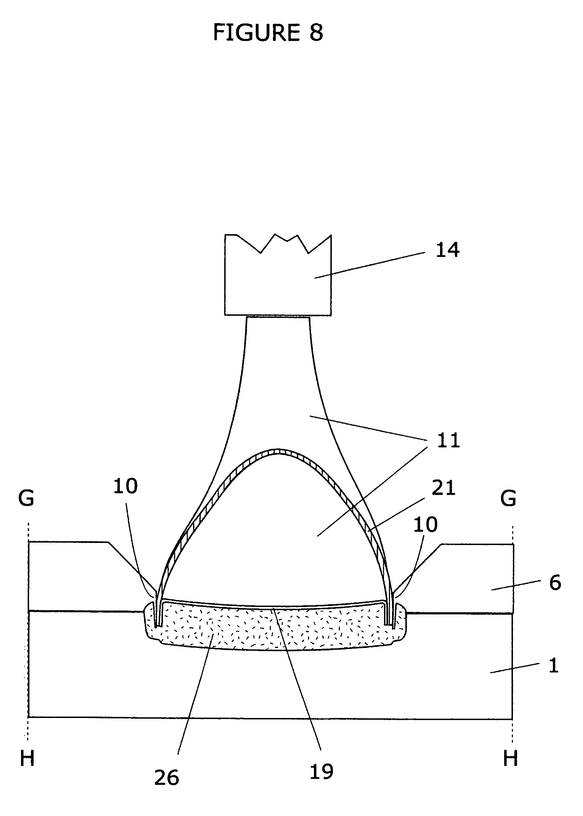

Figure 8 is a cross - sectional view GH of the mold closed, after injection.

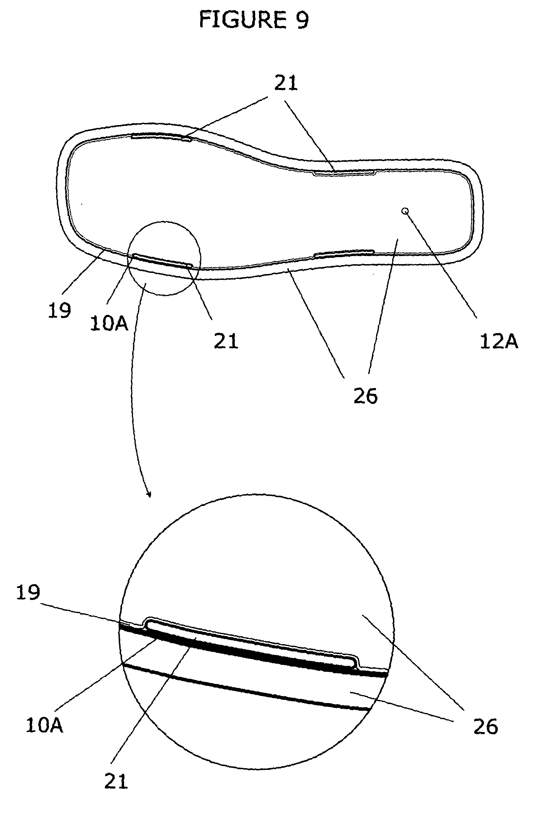

Figure 9 represents the horizontal sectional view of the shoe at the level where ring meets the base of the mold.

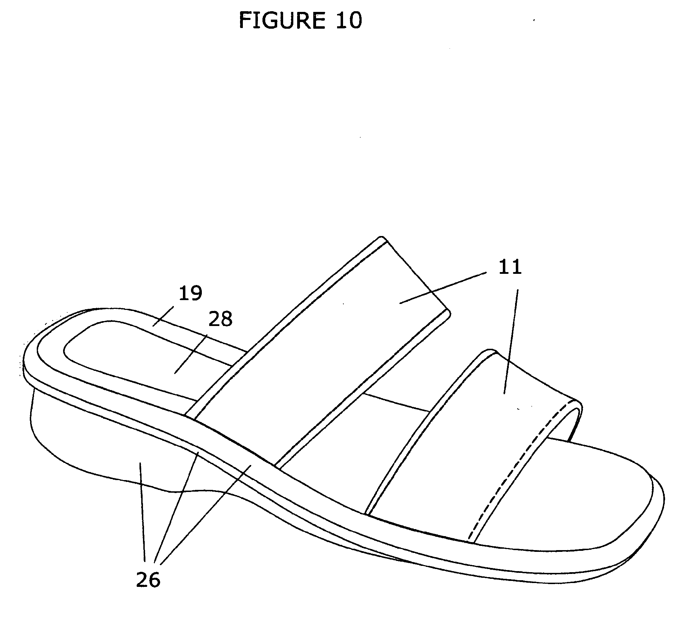

Figure 10 represents the appearance of the insole of a shoe done with the method of the present invention.

### DETAILED DESCRIPTION

In the present invention, the upper is made of independent or stitched straps or cutted pieces, whose inferior ends are placed aligned on the borders of the insole and firmely attached to it, one by one, by means of a reinforced stitch, staples or other way, about three millimeters above the border and, besides, at the level of the edge of the base of the last.

For the insole, the choosen material of about one millimeter thickness must have a nice look outside face, as it will remain at sight once the shoe is finished;. has to be flexible to adapt to the corners at the sides of the upper, but tear resistant as, only to it, the ends of the upper will be linked. Its backing must have very good adhesive characteristic to the material that will be used to mold the sole. Besides, other characteristics must be considered according quality desired, as humidity absortion, freshness, etc. Its shape is about the one of the base of the last, but increased all around about three to ten millimeters. It will depend on how deep the edge of the ring is buried in the sole in corresponding place, as, once the insole becomes bended inside the edge, it should not be longer than the edge and, even better, slightly shorter. Insole and upper together become a unit.

In the present invention the mold introduces necessary functional design innovations in its last and ring an adds a supporting structure of both. Base of the mold is similar to others used to make unit soles.

The original last that reproduces approximately the size and shape of the foot is modified into a metallic one, keeping its base untouched, but taking away upwards all that exceeds its vertical projection to the sides, leaving all around its lower part a vertical wall of about five millimeters height, becoming narrower upwards. The volume of the original last has to be compensated in height from the toe to the rear ends of the shanks, so the pieces of the upper remain drawn when placed on the last and without modifiying its wedge. The last allows the ring to pass around it from up to down, up to fit on the superior face of the base of the mold. In the center of the base of the last there is a metallic element, preferably cylindrical, of about four millimeter of diameter, protruding about six millimeters downwards, wich will be inserted in the perforation placed in the rear part of the insole to center, hold stable and drawn insole and upper ensamble while mold is being closed and during injection process.

The ring, is a metallic piece, vertically crossed by a central hole and surrounds the last in horizontal position. It moves from up to down in a course of about ten centimeters through the last, up to fit on the superior face of the base of the mold. The central hole, in its narrowest part of vertical wall that begins approximately from the inferior third downwards, has the shape of the base of the last, but bigger enough to leave room for the the ends of the upper and insole, that is about three millimeters. On the inferior face of the ring is excavated the molding cavity of the superior border of the sole, remaining inside all around, a vertical edge of about one millimeter thickness that protrudes downwards three to ten millimeters from the top of the cavity. The outer side of the cavity of the ring coincides with the outer side of the cavity excavated on the top of the base of the mold for molding the lower part of the sole. The ring is holded on a supporting structure, that allows the ring to move in a vertical course around the last, passing through it, up to fit on the base of the mold, to close the mold and, afterwards, in the opposite direction to open it. Being many alternatives of mechanical designs, to hold the ring and to allow it to move it in a determinated course in relation to the last, the following is one of them, consisting in two vertical circular perforations of about two centimeters of diameter, each one placed at each side of the central hole, one close to the toe and the other close to the heel and, through those, will pass the parallel guide bars of the supporting structure. Close to its corners, the ring has two to four circular small perforations that adjust in others as many cylindrical protruding elements with conic ends, placed on the superior face of the base of the mold, to center the ring when it is closing and to hold it in the right position while filling of the mold.

The supporting structure at the bottom holds the last; at the top has as fixing element for being coupled to the last carrier of machine and about the midde holds the ring, allowing it to move in a vertical course, as described before.

Being many alternatives of mechanical designs that accomplish those requirements of the supporting structure, the following is one of them, that has a central body that is a methalic frame of vertical position oriented in same direction as the last and has two identical horizontal plates with a central opening of same width and direction as the frame, welted to it in horizontal position, one close to the top and the other about eight centimeters below. Each plate has two circular holes placed in same position as those of the ring, thou of a diameter slightly reduced and through them pass and are welded two parallel guide bars that they extend downwards enough to allow the ring, when moving downwards, can fit on the superior face of the base of the mold. Once inserted the ring in the parallel guide bars, limiting elements are putted at their ends to avoid the ring to come out in its course.

The following molding process described, is for direct injection machine of soles to uppers, when using PVC, thermoplastic rubber, polyurethane or the like for the soles, with each station provided of rotative lasts carriers, each one holding two lasts in opposite vertical position, so when last carrier rotates in 180°, lasts alternates its stage for injection, as well as for pulling out the shoes and lasting the following upper. This invention can also be used for injection machines provided with one or three lasts in each station.

In the present invention, the process of molding the sole directly attached to upper-insole begins with the last and supporting structure in inverted position, with the ring retired backwards by gravity. Last is free for lasting the upper and insole ensemble, placing it through the toe and pulling them backwards, as far as they allow it and inserting the cylindrical element that protrudes at the center of the base of the heel through the perforation that the insole have in the rear part. Thus, upper and insole remain centered and stable after lasting and during injection process. The ensemble last and supporting structure rotate 180° and goes down and the ring by gravity descends throught the guide bars surpassing lightly the last, up to fit on the superior face of the base of the mold; the edge of the ring pushes downwards the insole borders with the ends of the upper attached to it, remaining both bended downwards and restrained within the edge. The insole covers the space between last and ring. Pressing elements of the station go down, pressing the ring against the base of the mold. The injector approaches up to get in touch with the injection point of the mold and introduces liquid or melted plastic that moves inside the cavity with much pressure from down to up and from center to the sides, pushing and squeezing the insole against the base of the last and its borders against the edge of the ring, sealing the superior part of the cavity of the mold, performing the insole as an inverted recipient, containing the plastic material and avoiding any important leaking. In those places where there are upper ends, they are the ones that are being supported on the edge of the ring; where there are no upper ends, the insole advances outwards up to the edge and, in the transition points between the side of the upper and its ends, the insole because of its flexibility, adapts to the corner sealing it almost completely. Nevertheless, little or nothing of the plastic is able to ascend through the remaining hollow in the corner, because is very narrow and besides, the pressure of the melted plastic on the insole from the center of the sole to the outside, is stronger and blockade it for going up. The present invention also can be done, pouring polyurethane or the like into the opened mold with the raised last, in specialized pouring machines. Once filling is finished, last descends closing the mold.

After a couple of minutes, plastic becomes solid and firmely attachet to the insole. Pressure elements ascend; last goes up and rotate 180° to inverted position, ring by gravity moves backwards leaving the last free to take the shoe off. The shoe will show the insole attached to the sole with the borders of the insole embedded into the sole, looking like a wrapped and superposed insole. The hole on the heel must be covered with a label.

In relation to the drawings, FIGS: 1A to D represents different views of the base of the mold.

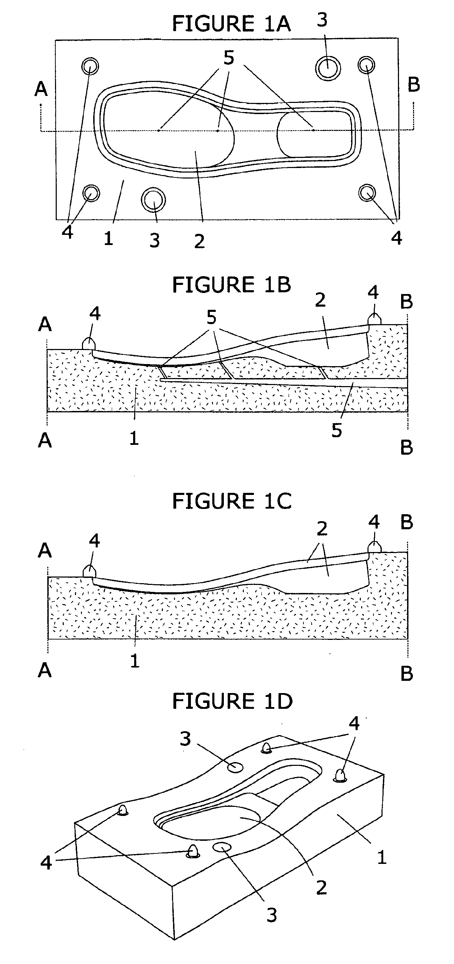

FIG. 1A represents the upside view with their elements: the body of the base 1; most of the cavity 2 for molding the lower part of the sole; the circular perforations 3 that leave room for the ends of the guide bars when mold is closed; the protruding elements 4 to center the ring; the ends of the injection duct 5 through wich melted plastic flows into the cavity 2.

FIG. 1B represents the length sectional AB of the mold, in wich shows the body 1 of the base with the molding cavity 2 of the sole the elements for centering 4 the ring that protrudes over the base and the injection duct 5 that acceds to the molding cavity 2 through several branches 5.

FIG. 1C represents the length sectional AB of the mold to be filled by pouring, so it does not have injection duct.

FIG. 1D represents an angled perspective of the base of the mold with the elements detailed in previous drawings.

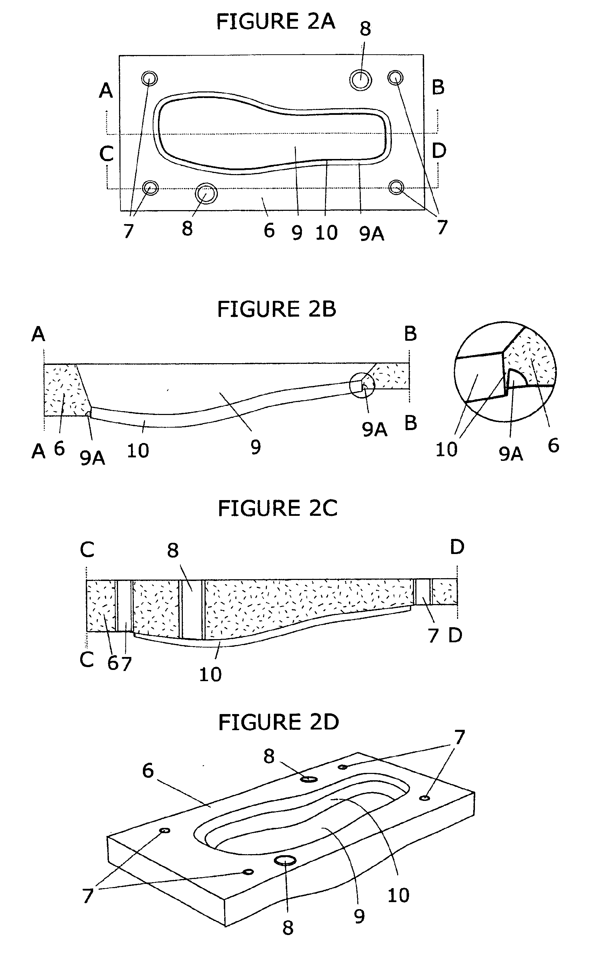

FIG. 2A-D represents diverent views of the ring.

FIG. 2A represents the inferior face of the ring with its body 6; the perforations for centering 7 the ring on the base; the perforations 8 that allow the guide bars to pass through the ring, that hold the ring and determine its vertical course; the central hole 9 that leaves room for the last, so the ring can pass through it; the cavity 9A to mold the superior border of the sole and the edge 10.

FIB. 2B represents the length sectional AB that shows the body 6 of the ring, the central hole 9 that crosses it, the cavity 9A that molds the superior border of the sole and the edge 10.

FIG. 2C represents the length sectional CD of the ring, that shows the body 6 of the ring, the circular perforations 7 to center the ring on the base, the circular perforations 8 to allow the guide bars of the supporting structure to pass through and to hold the ring and the edge 10 that protrudes below the body 6 of the ring.

FIG. 2D represents an angled superior view of the ring showing its parts previously described; perforations to center 7 the ring on the base of the mold; perforations 8 to allow the guide bars to pass throught them, the central hole 9 and the edge 10.

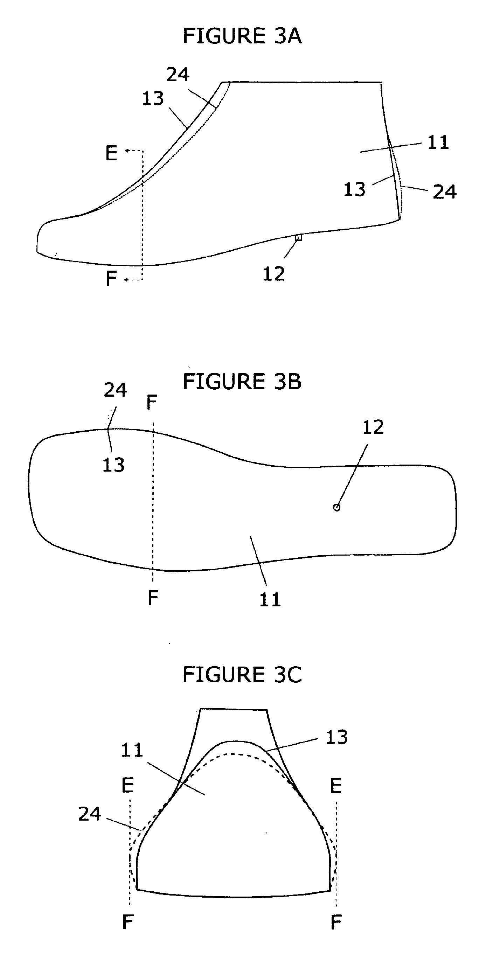

FIGS. 3A-C represent different views of the last, showing in continuous line the last of the mold and in discontinuous line the original one, being what is between both what is added or taken away, depending if the last of the mold is bigger or smaller than the original last, remaining the continuous line when both coincide.

FIG. 3A shows the side view of the last 13 of the mold, in wich its bottom remains untouched, eliminating upwards all that exceeds outwards of its vertical projection, leaving all around its lower part a vertical wall of about five millimeters height, becoming narrower upwards, but compensating its wedge from the toe to the rear of the shanks by adding volume in height. At the bottom of the heel is shown the element 12 to center and hold the insole-upper, protruding downwards.

FIG. 3B represents the base of the last of the mold 13, that is the same as the original last 24 and has is the center of the heel the element to center 12 the insole.

FIG. 3C represents the crossed sectional EF of the last of the mold 13, that is reduced at the sides and increased in height to compensate the volume of the original last.

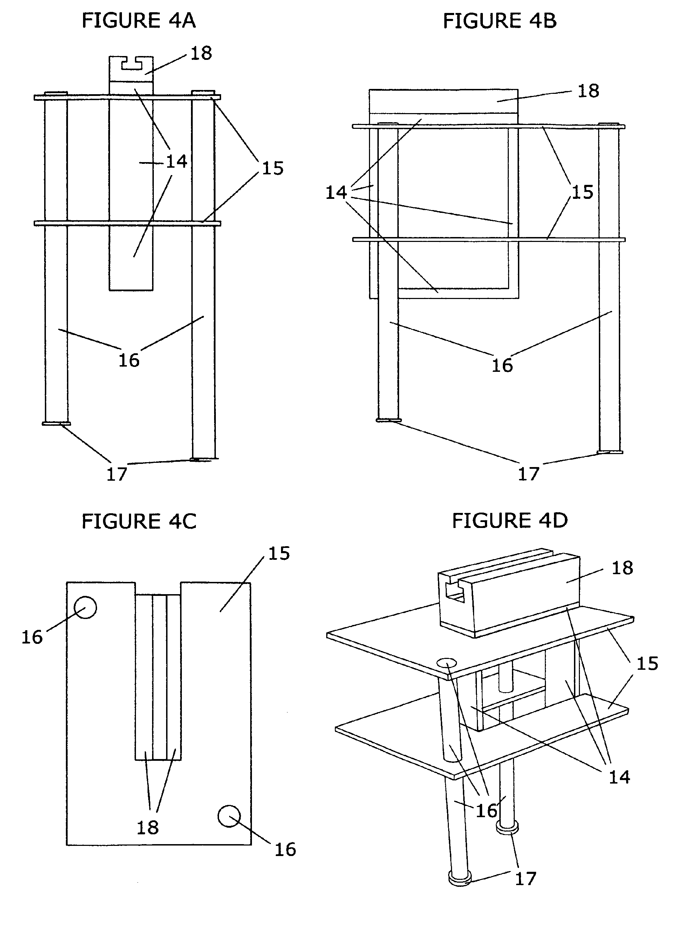

FIGS. 4A-D represents different views of the supporting structure in wich FIG. 4A shows the front view with the central body 14, the horizontal plates 15 welded to the central body, the parallel guide bars 16 with the correspondent limits 17 placed at its inferior ends once ring 6 is inserted throught the bars, to avoid ring to come out in its course and finally the coupling element 18 to attach the hole structure to the last carrier of the machine.

FIG. 4B represents the side view of the supporting structure with parts described in previous figure.

FIG: 4C represents the upside view of the supporting structure with parts described in previous figure.

FIG. 4C represents the upside view of the supporting structure in wich is shown the superior vertical plate 15, the superior ends of the guide bars 16 and the coupling element 18 to the last carrier.

FIG. 4D represents an angled perspective of the supporting structure with all its parts, the central body 14 with two horizontal plates 15 welded to it, with the two guide bars 16 with its limits 17 and the coupling element 18.

FIG: 5 represents the ensamble of the opened mold: the body of the base of the mold 1 with its molding cavity 2 in whose the access points of the injection duct 5 can be appreciated; the cavity 3 that leaves room for the ends of the guide bars 16 with its limits 17, the centering elements 4 that protrudes upside its superior face; the ring 6 with the holes for centering 7, crossed by the guide bars 16 that holds it; the supporting structure with its central body 14, the horizontal plates 15 welded on it, with the vertical guide bars 16 crossing through and welded to the plates 15, with the last 11 placed below the central body 14 and the coupling element 18 on it.

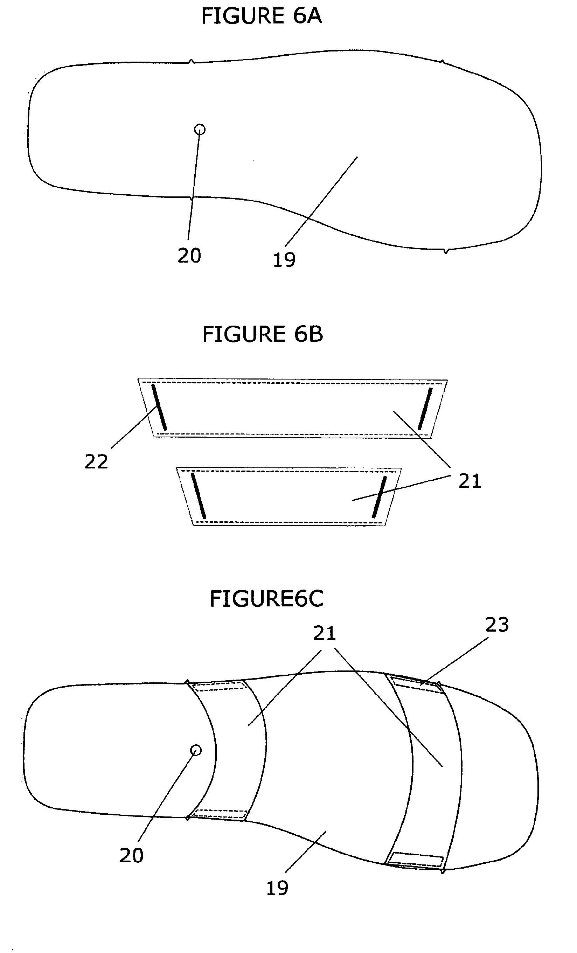

FIGS. 6A-C represents pieces that are part of the upper-insole ensamble.

FIG: 6A represents the insole 19 with the centering hole 20 at the heel.

FIG. 6B shows pieces of an upper 21 of a certain style, with the marks 22 to point the places where to stitch it to the insole 19. Upper pieces can be different according the choosen style.

FIG. 6C shows the upper pieces 21 united to the insole 19 with reinforced stitch 23.

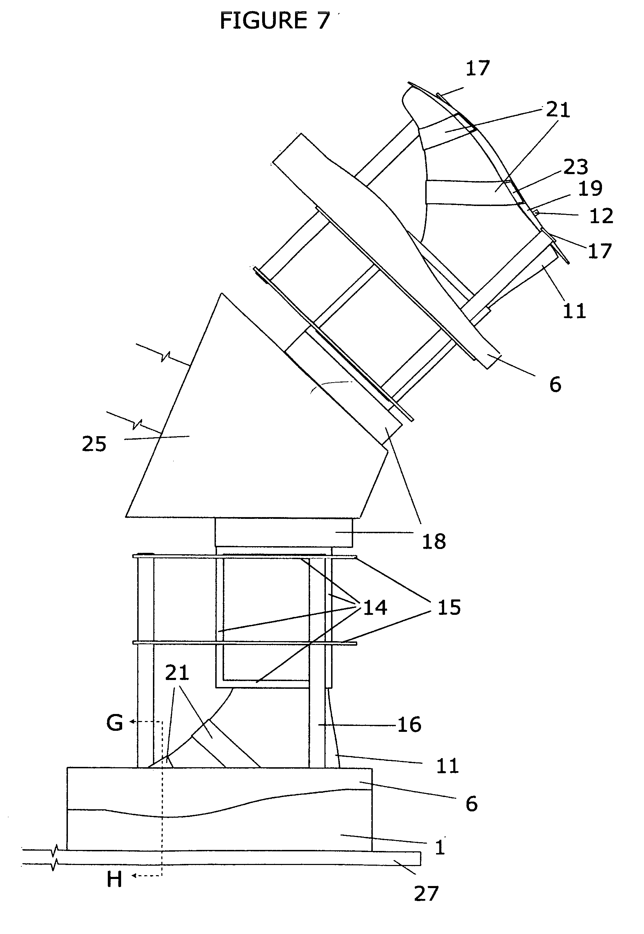

FIG. 7 represents a side view of the mold ensamble with its base 1 placed on the table 27 of the machine and two of each lasts 11, rings 6 and supporting structures 14-15-16-17-18 placed on the rotating last carrier 25 of the machine, in wich lasts 11 are dressed with the ensamble insole 19 and upper 21. One set of supporting structure 14-15-16-17-18, ring 6 and dressed last 11 are in inverted position that shows the ring 6 retired backwards, leaving the last 11 free and allows to see the centering element 12.

FIG: 8 represents a crossed sectional view GH of the mold with the sole 26 in wich the upper 21 united with the insole 19 can be seen, surrounding the last 11, with their borders contained by the edge 10, embedded downwards into the sole 26. Also shows the base 1 of the mold, the ring 6 and the inferior part of the central body 14 of the supporting structure.

FIG: 9 represents a horizontal sectional view of the shoe at the level where the sole 26 molded in the cavity of the base of the mold meets the superior border of it, molded in the cavity of the ring with the emptiness 10A leaved by the edge, the hole 12A leaved by the centering element, the insole 19 and the upper ends 21.

FIG: 10 represents a sandal made with the method of the present invention with the sole 26, where can be appreciated the finishing of the insole 19, the upper pieces 21 and a label 28 that covers the hole leaved by the centering element.

## Claims

1. A method for manufacturing open heeled shoes, with or without other openings around, **CHARACTERIZED by** molding the sole directly attached to the insole, with the borders of the insole finishing embedded downwards into the sole, below the outline of the base of the last.

2. A method for manufacturing shoes according to the first claim **CHARACTERIZED by** cutting a soft insole of about one and a half millimeters thickness, with a perforation preferably circular in the middle of the heel to center it, with the shape of the base of the last, but increased all around in three to ten millimeters approximately on whose borders are aligned the ends of the upper pieces and strongly attached to the insole by stitching or staples or other means close to the borders and, besides, at the level that will correspond to the edge of the base of the last. How much to increase the insole beyond the base of the last, will depend of the depth of the edge of the ring in the zone where the borders of the insole will be contained once bended, pushed by the edge of the ring, in order to coincide or to remain slightly shorter than the edge.

3. A mold according the previous claims, **CHARACTERIZED by** being made up of the following parts: a last, that is a modified version of the original last, that keeps its base untouched, but taking away upwards all that exceeds outwards the vertical projection of the base of the last, leaving all around its lower part a vertical wall of about five millimeters height, becoming narrower upwards, but compensating in height the wedge of the original last from toe to the rear part of the shanks. Last has in the center of the bottom of the heel a preferably cylindrical element inserted and protruding downwards about six millimeters from the bottom, to center the ensamble insole and upper. Other part of the mold is a ring, that is a metallic piece, placed in horizontal position surrounding the last, vertically crossed by a central hole that, in its narrowest part that begins about the inferior third downwards, has the shape of the base of the last, but increased about three millimeters all around, with vertical walls, leaving enough room for the tickness of the ends of the pieces of the upper and insole. In the inferior face of the ring is excavated the superior border of the molding cavity of the sole, remaining inside all around a vertical edge of abouth one millimeter thickness that protrudes downwards three to ten millimeters from the top of the cavity. The outer side of its molding cavity coincides with the top of the outer side of the molding cavity of the lower part of the sole, excavated in the superior face of the base of the mold. The ring also has elements that, together with the supporting structure that holds it, allows the ring to move in a precise vertical course through the last from up to down, surpassing the last slightly, up to fit with the base of the mold and in the opposite direction to open the mold.
Other part of the mold is the supporting structure, with a central vertical body that at its bottom holds the last stable in vertical position; at the top is attached to the last carrier of the molding machine and has guiding elements to hold the ring and allow it to move in a precise vertical course surrounding and through the last. The mold also has a base where is the molding cavity of the inferior part of the sole.

4. A method for manufacturing shoes according to the previous claims, **CHARACTERIZED by** lasting the ensamble of insole and upper on the last of the mold, remaining their borders protruding outwards; the mold is closed, the ring moves from upside to down around and through the last up to fit on the base of the mold, pushing the borders of the insole downwards, keeping them bended and contained inside the edge of the ring. Mold is closed, liquid plastic material fills the mold cavity, pushing and pressing the insole against the bottom of the last and the borders of the insole against the edge of the ring, the insole acting as a bridge between last and ring, sealing the superior part of molding cavity, containing the liquid plastic material, avoiding relevant leakage of the material. Mold is opened and a clean finished shoe with the borders of the insole embedded into the sole is obtained.

5. A shoe with open heel, with or without other openings around, **CHARACTERIZED by** been obtained by previous method.
